# NOUVEAU FASCICULE DE BREVET EUROPEEN

(11) **EP 3 954 262 B2**
(45) Date de publication et mention de la décision concernant l'opposition: **22.07.2026**
(45) Mention de la délivrance du brevet: 21.06.2023
(21) Numéro de dépôt: 21189261.7
(22) Date de dépôt: 03.08.2021
(51) Int. Cl.: A47L 5/24, A47L 9/12

(54) **ASPIRATEUR PORTATIF EQUIPE D'UN FILTRE AMOVIBLE**
TRAGBARER STAUBSAUGER MIT ABNEHMBAREM FILTER
PORTABLE VACUUM CLEANER PROVIDED WITH A REMOVABLE FILTER

(30) Priorité: 11.08.2020 FR 2008438
(43) Date de publication de la demande: 16.02.2022
(73) Titulaire: SEB S.A., 69130 Ecully (FR)
(72) Inventeur: ESCALETTES, Bertrand, 27200 Vernon (FR)
(74) Mandataire: Novagraaf International SA

(56) Documents cités:
- EP-A1- 2 040 599
- EP-B1- 2 040 599
- WO-A1-2017/177318
- US-A1- 2010 229 323
- US-A1- 2018 303 297
- US-A1- 2019 183 302

## Description

La présente invention concerne le domaine des aspirateurs permettant d'aspirer des poussières et des déchets de faible granulométrie présents sur une surface à nettoyer, qui peut par exemple être du carrelage, du parquet, du stratifié, de la moquette ou un tapis.

### Etat de la technique

Un aspirateur, et plus particulièrement un aspirateur portatif, comporte de façon connue :
- un boitier d'aspirateur,
- une poignée de préhension reliée au boitier d'aspirateur,
- un embout d'aspiration par lequel l'air extérieur peut être aspiré par l'aspirateur portatif,
- au moins un orifice d'échappement par lequel l'air nettoyé peut sortir de l'aspirateur portatif,
- un circuit aéraulique qui s'étend entre l'embout d'aspiration et l'orifice d'échappement,
- une unité d'aspiration disposée sur le circuit aéraulique, l'unité d'aspiration comprenant un moteur électrique et un ventilateur pour générer un flux d'air dans le circuit aéraulique depuis l'embout d'aspiration jusqu'à l'orifice d'échappement,
- un dispositif de séparation des poussières et des déchets, ci-après dénommés les déchets, disposé sur le circuit aéraulique en amont de l'unité d'aspiration et traversé par un flux d'air généré par le ventilateur lorsque l'aspirateur est en fonctionnement,

Par dispositif de séparation des déchets il est fait référence à un dispositif de séparation, par exemple de type filtre utilisant au moins un média filtrant ou de type cyclonique utilisant au moins un cyclone, qui soit capable de séparer des déchets et/ou poussières du flux d'air aspiré.

De manière connu, le circuit aéraulique peut être équipé, en plus du dispositif de séparation des déchets, d'un filtre ou de plusieurs filtres à poussières disposé(s) en aval et/ou en amont de l'unité d'aspiration pour protéger l'unité d'aspiration et/ou éviter de laisser échapper en dehors de l'aspirateur de l'air chargé de poussières.

Avec le temps ce type de filtre se colmate à cause notamment des poussières accumulées sur les surfaces amont du filtre. Il est alors nécessaire de retirer ce dernier pour le nettoyer.

Il est ainsi connu que ce type de filtre soit amovible.

Le brevet US10631698 décrit un aspirateur portatif comprenant une unité de filtre annulaire incluant un filtre également annulaire. L'unité de filtre est détachable et retirable par le haut de l'appareil. Le filtre annulaire est disposé dans un espace de filtre formé dans l'unité de filtre et est retirable de l'unité de filtre pour être nettoyé après avoir démonté un couvercle de l'unité de filtre.

A l'usage, l'opération de nettoyage de ce filtre amovible s'avère compliquée et nécessite plusieurs opérations manuelles pour le retrait du filtre proprement dit.

Un aspirateur portatif selon le préambule de la revendication 1 est connu par exemple de US-A-20190183302 .

### Résumé de l'invention

La présente invention vise à remédier à tout ou partie des inconvénients précités.

Le problème technique à la base de l'invention consiste notamment à fournir un aspirateur portatif dont le filtre à poussières, qui est différent du dispositif de séparation des déchets, soit facilement retirable de l'aspirateur pour être nettoyé.

A cet effet, la présente invention est définie par la revendication 1.

La chambre de filtration comprend une ouverture d'accès pour accéder au filtre amovible qui est formée dans l'aspirateur portatif de telle sorte qu'elle permet d'accéder au filtre amovible lorsque le bol amovible est détaché du boîtier d'aspirateur. Lorsque le bol amovible est attaché au boitier d'aspirateur, le bol amovible est disposé par rapport au boîtier d'aspirateur de telle sorte qu'il empêche l'accès au filtre amovible par l'ouverture d'accès.

Selon l'invention, le filtre amovible est accessible via l'ouverture d'accès et peut être retiré par l'ouverture d'accès lorsque le bol amovible est détaché du boîtier d'aspirateur et le filtre amovible est rendu inaccessible à l'utilisateur lorsque le bol amovible est attaché au boitier d'aspirateur.

Une telle configuration permet de pouvoir facilement retirer le filtre amovible après avoir retiré le bol amovible. En effet, après avoir retiré le bol amovible, par exemple pour retirer les déchets accumulés dans le bol amovible, le filtre amovible est directement accessible sans avoir à ouvrir un couvercle ou démonter une pièce intermédiaire.

L'aspirateur peut en outre présenter une ou plusieurs des caractéristiques suivantes, prises seules ou en combinaison.

L'ouverture d'accès est formée dans le boitier d'aspirateur et fait face au bol amovible lorsque le bol amovible est attaché au boîtier d'aspirateur.

L'embout d'aspiration constitue une partie avant de l'aspirateur portatif. L'ouverture d'accès et le bol amovible sont agencés l'un par rapport à l'autre de telle sorte que le filtre amovible est retirable vers l'avant de l'aspirateur portatif par l'ouverture d'accès lorsque que le bol amovible est détaché du boîtier d'aspirateur.

Ce retrait par l'avant du filtre amovible procure à l'utilisateur une position ergonomique pour retirer le filtre amovible. En effet, les aspirateurs portatifs sont globalement tenus par l'arrière via la poignée de préhension et par une première main. Le fait de pouvoir retirer le filtre amovible par l'avant, permet à l'utilisateur d'utiliser sa deuxième main pour saisir et retirer le filtre amovible par l'avant. Durant cette phase de retrait du filtre amovible, les deux mains se trouvent en vis-à-vis l'une par rapport à l'autre et exercent des forces de traction opposées facilitant la préhension à la fois de l'aspirateur portatif par la première main et la préhension du filtre amovible par la deuxième main et facilitant également le retrait du filtre amovible en dehors de la chambre de filtration.

Le dispositif de séparation est logé dans le bol amovible de telle sorte qu'il puisse être séparé du boîtier d'aspirateur avec le bol amovible.

Cette construction permet de retirer le dispositif de séparation avec le bol amovible pour pouvoir retirer et nettoyer plus facilement le dispositif de séparation.

Le moteur électrique comprend un arbre de sortie ayant un axe de rotation. Avantageusement, le dispositif de séparation, le ventilateur et le moteur électrique sont globalement alignés.

Une telle construction en ligne est très compacte et permet d'obtenir un aspirateur portatif de faible encombrement. Par ailleurs, le fait d'avoir le dispositif de séparation, le ventilateur et le moteur électrique alignés, autrement dit en ligne, permet d'optimiser les trajectoires des conduites du circuit aéraulique de réduire les pertes de charge du flux d'air circulant dans le circuit aéraulique.

De préférence, le dispositif de séparation, le ventilateur et le moteur électrique sont alignés sur l'axe de rotation de l'arbre de sortie du moteur électrique. L'ouverture d'accès est avantageusement disposée dans le boitier d'aspirateur entre le dispositif de séparation des déchets et le moteur électrique selon une direction parallèle à l'axe de rotation.

Avantageusement, lorsque le bol amovible est attaché au boitier d'aspirateur, il est en appui sur le boitier de filtre via une interface de connexion du boitier d'aspirateur.

Avantageusement, l'interface de connexion définit un plan d'interface, l'ouverture d'accès est formée sur le plan d'interface ou est décalée par rapport au plan d'interface selon une direction parallèle à l'axe de rotation.

Avantageusement, l'ouverture d'accès est décalée par rapport au plan d'interface vers l'intérieur du boitier d'aspirateur.

De préférence l'ouverture d'accès est formée dans un plan décalé qui est décalé par rapport au plan d'interface vers l'intérieur du boitier d'aspirateur. Le plan décalé est décalé de moins de 1 cm par rapport au plan d'interface mesuré selon la direction de l'axe de rotation.

L'interface de connexion comprend une surface de contact sur laquelle prend appui le bol amovible lorsqu'il est attaché au boitier d'aspirateur. La surface de contact est de forme sensiblement annulaire. La chambre de filtration et l'ouverture d'accès sont arrangées dans le boitier d'aspirateur radialement à l'intérieur de la surface de contact.

Une telle construction permet de ménager simplement l'ouverture d'accès pour permettre d'avoir la chambre de filtration inaccessible à l'utilisateur lorsque le bol amovible est attaché au boîtier d'aspirateur et pour permettre son accès lorsque le bol amovible est détaché du boîtier d'aspirateur. En outre, une surface de contact sensiblement annulaire est simple à réaliser et permet d'avoir une pression de contact uniformément répartie du bol amovible sur le boîtier d'aspirateur. Une pression de contact uniformément répartie permet de gérer plus efficacement les étanchéités entre le bol amovible et la surface de contact.

Le bol amovible peut être attaché de différentes manières au boîtier d'aspirateur, notamment par clipsage, à l'aide d'au moins une encoche et d'un loquet de verrouillage, par un moyen de fixation de type baïonnette, par vissage ou tout autre moyen connu de l'homme du métier.

Avantageusement, la chambre de filtration est entièrement contenue dans le boîtier d'aspirateur et est arrangée entre l'unité d'aspiration et une paroi du boitier d'aspirateur.

Cette configuration permet de ne pas réduire le volume interne du bol amovible pour permettre une capacité de stockage des déchets optimale dans le bol amovible. Par ailleurs, le fait que la chambre de filtration soit arrangée entre l'unité d'aspiration et une paroi du boitier d'aspirateur permet un arrangement interne du boîtier qui soit compact. Par ailleurs lorsque l'ouverture d'accès est décalée par rapport au plan d'interface vers l'intérieur du boitier d'aspirateur, le filtre amovible ne fait pas saillie en dehors du boitier d'aspirateur lorsque le bol amovible est détaché. Cette configuration évite ainsi que le filtre amovible vienne gêner ou accrocher le bol amovible lorsque ce dernier est détaché du boitier d'aspirateur.

Avantageusement, le filtre amovible et la chambre de filtration s'étendent au moins partiellement autour de l'unité d'aspiration.

Selon l'invention, le filtre amovible et la chambre de filtration ne s'étendent pas nécessairement tout autour de l'unité d'aspiration pour permettre par exemple, dans certaines configurations d'aspirateur portatifs, des passages de câbles ou de conduites aérauliques qui ne peuvent pas passer dans la chambre de filtration. Le filtre amovible et la chambre de filtration pourrait par exemple avoir une forme en « C » qui s'étend autour de l'unité d'aspiration.

Avantageusement, le filtre amovible et la chambre de filtration sont de formes globalement annulaires et s'étendent autour de l'unité d'aspiration, de préférence autour du moteur électrique de l'unité d'aspiration.

Une telle forme globalement annulaire est fermée et donc sensiblement en forme de « O ». Cette forme permet d'optimiser le volume interne de la chambre de filtration autour de l'unité d'aspiration pour obtenir un aspirateur portatif compact. Si par exemple des passages de câbles électriques ou de conduites aérauliques sont nécessaires au niveau de la chambre de filtration, ces derniers peuvent être ménagés autour de la chambre de filtration par exemple dans des encoches ou rainures de passages qui n'altèrent que sensiblement la forme annulaire de la chambre de filtration.

Avantageusement, le moteur électrique comprend un arbre de sortie ayant un axe de rotation, dans lequel l'arbre de sortie est couplé au ventilateur et dans lequel le filtre amovible, la chambre de filtration et l'ouverture d'accès sont de formes annulaires et sont centrés sur l'axe de rotation.

Cette disposition concentrique autour de l'axe de rotation permet d'optimiser la disposition de la chambre de filtration autour de l'unité d'aspiration et ainsi de réduire son encombrement pour une compacité améliorée de l'aspirateur portatif.

Avantageusement, le dispositif de séparation des déchets est un séparateur cyclonique dont l'axe principal est coaxial avec l'axe de rotation de l'arbre de sortie du moteur électrique.

Avantageusement, le filtre amovible est disposé dans le circuit aéraulique entre l'unité d'aspiration et l'orifice d'échappement. Autrement dit le filtre amovible et la chambre de filtration sont disposés sur la partie du circuit aéraulique qui est en avale par rapport à l'unité d'aspiration et est donc placé à l'échappement par rapport à l'unité d'aspiration.

Bien que l'invention soit également adaptée à un filtre amovible et une chambre de filtration qui peuvent être disposés sur la partie amont du circuit aéraulique, c'est-à-dire en amont de l'unité d'aspiration, le fait que la chambre de filtration soit formée entre l'unité d'aspiration et une paroi du boitier d'aspirateur est plus adapté pour une chambre d'aspiration et un filtre amovible qui sont disposés dans la partie avale du circuit aéraulique. En effet, une configuration où la chambre de filtration est une chambre avale permet de mieux optimiser le circuit aéraulique, en termes de pertes de charges, de réduction sonore et d'encombrement global, lorsque la chambre d'aspiration et le filtre amovible sont disposés dans la partie avale du circuit aéraulique.

Avantageusement l'aspirateur portatif comprend un carter d'unité d'aspiration qui entoure au moins partiellement l'unité d'aspiration.

Avantageusement, le filtre amovible et la chambre de filtration sont de formes annulaires et la chambre de filtration s'étend entre une paroi du carter d'unité d'aspiration et le boitier de l'appareil.

Avantageusement, le carter d'unité d'aspiration comprend une première paroi et une deuxième paroi de formes annulaires, par exemple tubulaires ou tronconiques, la première paroi annulaire entourant au moins partiellement l'unité d'aspiration et la deuxième paroi annulaire entourant au moins partiellement la première paroi annulaire, la deuxième paroi annulaire étant concentrique à la première paroi annulaire et étant formée à distance de la première paroi annulaire pour délimiter un espace annulaire entre la première paroi annulaire et la deuxième paroi annulaire, l'espace annulaire formant la chambre de filtration dans laquelle est logé le filtre amovible.

Cet arrangement permet d'optimiser la réalisation de la chambre de filtration qui est formée dans une cavité annulaire du carter d'unité d'aspiration. Le carter d'unité d'aspiration permet ainsi de réaliser deux fonctions : réaliser un carter pour l'unité d'aspiration et réaliser la chambre de filtration. Le carter d'unité d'aspiration est de préférence obtenu de fabrication en une seule pièce, par exemple par injection de matière plastique, ce qui permet de réaliser le carter d'unité d'aspiration et la chambre de filtration de façon simple et économique tout en optimisant les volumes internes autour de l'unité d'aspiration et ainsi obtenir un aspirateur portatif qui soit relativement compact et de construction simple.

Avantageusement, la deuxième paroi annulaire du carter d'unité d'aspiration forme au moins une paroi du boitier d'aspirateur. En d'autres termes au moins une surface extérieure de la deuxième paroi annulaire du carter d'unité d'aspiration forme une surface extérieure de l'aspirateur portatif.

Cet arrangement permet avec une seule pièce de réaliser trois fonctions. En effet, le carter d'unité d'aspiration permet de réaliser un carter d'unité d'aspiration, de réaliser la chambre de filtration et de former une partie du boîtier de l'aspirateur portatif. Cet arrangement permet ainsi d'obtenir un aspirateur portatif qui soit plus simple à fabriquer et à assembler qu'un aspirateur portatif conventionnel. En outre il permet d'obtenir un aspirateur portatif plus compact et plus léger qu'un aspirateur conventionnel.

Avantageusement, la deuxième paroi annulaire comprend ledit au moins un orifice d'échappement, de préférence plusieurs orifices d'échappement. Ledit au moins un orifice d'échappement forme au moins une sortie d'air de la chambre de filtration.

Cet arrangement permet d'obtenir un aspirateur portatif qui soit encore plus simple à fabriquer en supprimant notamment les conduites entre la chambre de filtration et la paroi extérieure du boîtier d'aspirateur.

Dans une variante de réalisation, également couverte par l'invention revendiquée, la deuxième paroi annulaire du carter d'unité d'aspiration est distincte du boitier et est disposée radialement à l'intérieur du boitier.

Lorsque la deuxième paroi annulaire du carter d'unité d'aspiration est distincte du boitier et est disposée radialement à l'intérieur du boitier, la deuxième paroi annulaire comprend au moins un orifice de sortie pour mettre en communication aéraulique la zone avale de la chambre de filtration avec ledit au moins un orifice d'échappement

Avantageusement, la première paroi annulaire et la deuxième paroi annulaire sont reliées par au moins une paroi de liaison qui s'étend radialement, par rapport à l'axe de rotation du moteur électrique, entre la première paroi annulaire et la deuxième paroi annulaire.

Avantageusement, la paroi de liaison s'étend au fond de la chambre de filtration, de préférence sur un côté du carter d'unité d'aspiration qui est opposé à l'ouverture d'accès.

Cette configuration permet d'optimiser le volume interne de la chambre de filtration et facilite le démoulage du carter d'unité de filtration lorsqu'il est obtenu par injection plastique.

Avantageusement, ladite paroi de liaison est une paroi en forme de disque annulaire qui comprend au moins une entrée d'air de la chambre de filtration en communication aéraulique avec une sortie d'air de d'unité d'aspiration.

La première paroi annulaire est de préférence dépourvue d'ouverture sur sa périphérie.

Avantageusement, la première paroi annulaire, la deuxième paroi annulaire et la dite au moins une paroi de liaison sont obtenus de fabrication en une seule pièce. La première paroi annulaire, la deuxième paroi annulaire et la dite au moins une paroi de liaison sont par exemple obtenus par injection sous pression de matière plastique. Ainsi, et bien qu'il regroupe, comme précédemment décrit, plusieurs fonctions, le carter d'unité d'aspiration reste simple à fabriquer.

Avantageusement, le filtre amovible est de forme annulaire et comprend de préférence un média filtrant plissé qui est configuré selon une forme annulaire.

Un filtre annulaire, de préférence plissé, permet d'optimiser la surface filtrante et la capacité de filtration tout en optimisant les volumes de l'appareil d'aspiration. Ceci est d'autant plus vrai lorsque le filtre annulaire est arrangé autour d'une unité d'aspiration de forme globalement cylindrique.

Avantageusement, le filtre amovible comprend des disques d'extrémités annulaires fixés aux extrémités axiales du média filtrant plissé.

Avantageusement, les disques d'extrémités annulaires sont étanches.

Avantageusement, un premier disque d'extrémité annulaire ferme l'ouverture d'accès lorsque le filtre amovible est placé dans la chambre de filtration.

Cette configuration utilise donc un disque d'extrémité annulaire du filtre pour fermer l'ouverture d'accès ce qui évite d'avoir à prévoir une pièce intermédiaire pour fermer la chambre de filtration. L'aspirateur portatif ainsi obtenu est plus simple de construction.

Avantageusement, le premier disque d'extrémité annulaire comprend des moyens de préhension tels que des languettes de préhension ou une collerette annulaire de préhension faisant saille axialement depuis le premier disque d'extrémité pour permettre à l'utilisateur de pouvoir retirer plus facilement le filtre amovible. Par ailleurs, l'intégration de moyens de préhension directement au premier disque d'extrémité annulaire simplifie encore la construction de l'aspirateur portatif. Les moyens de préhension sont de préférence venus d'injection plastique avec le premier disque d'extrémité annulaire.

Avantageusement, le premier disque d'extrémité annulaire est transparent pour permettre à l'utilisateur de vérifier, visuellement et sans avoir à retirer le filtre amovible en dehors du boitier de filtre, l'état de propreté ou de colmatage du filtre amovible pour savoir si le filtre amovible doit être nettoyé ou non.

Avantageusement, le filtre amovible délimite dans la chambre de filtration une zone amont et une zone avale de la chambre de filtration.

Avantageusement, l'aspirateur portatif comprend au moins un premier joint d'étanchéité disposé radialement entre la première paroi et le premier disque d'extrémité annulaire. Le premier joint d'étanchéité est de préférence attaché au filtre amovible.

De préférence, l'aspirateur portatif comprend un deuxième joint d'étanchéité disposé radialement entre le deuxième disque d'extrémité annulaire et la deuxième paroi annulaire. Le deuxième joint d'étanchéité est de préférence attaché au filtre amovible.

De préférence, l'aspirateur portatif comprend un troisième joint d'étanchéité disposé radialement entre le premier disque d'extrémité annulaire et la deuxième paroi annulaire. Le troisième joint d'étanchéité est de préférence attaché au filtre amovible.

De préférence, l'aspirateur portatif comprend un quatrième joint d'étanchéité disposé radialement entre le deuxième disque d'extrémité annulaire et la première paroi annulaire. Le quatrième joint d'étanchéité est de préférence attaché au filtre amovible.

Le premier joint d'étanchéité et/ou le troisième joint d'étanchéité d'un côté du filtre amovible et le deuxième joint d'étanchéité et/ou le quatrième joint d'étanchéité de l'autre côté du filtre amovible permettent, à l'exception des porosités du média filtrant, d'isoler la zone amont de la zone avale de la chambre de filtration.

Le premier joint d'étanchéité et le troisième joint d'étanchéité permettent de fermer de manière étanche, au niveau du premier disque annulaire, la chambre de filtration.

### Brève description des figures

La description suivante met en évidence les caractéristiques et avantages de la présente invention. Cette description s'appuie sur des figures, parmi lesquelles :
- [Fig. 1] La figure 1 illustre une vue d'ensemble d'un aspirateur portatif selon un mode particulier de réalisation ;
- [Fig. 2] La figure 2 illustre l'aspirateur portatif de la figure 1 selon une vue en coupe longitudinale ;
- [Fig. 3] La figure 3 illustre l'aspirateur portatif de la figure 1 selon une vue en perspective, de trois quarts avant, sans le bol amovible et sans le séparateur ;
- [Fig. 4] La figure 4 illustre une vue en coupe partielle de l'arrière de l'aspirateur portatif de la figure 3 ;
- [Fig. 5] La figure 5 illustre l'aspirateur portatif de la figure 1 selon une vue en perspective de trois quarts avant sans le bol amovible et sans le séparateur, avec le filtre amovible partiellement retiré de la chambre de filtration ;
- [Fig. 6] La figure 6 illustre une vue en coupe partielle de l'arrière de l'aspirateur portatif de la figure 5 ;
- [Fig. 7] La figure 7 illustre l'aspirateur portatif de la figure 1 selon une vue en perspective de trois quarts avant sans le bol amovible et sans le séparateur, avec le filtre amovible complètement retiré de la chambre de filtration ;
- [Fig. 8] La figure 8 illustre une vue en coupe partielle de l'arrière de l'aspirateur portatif de la figure 7 ;
- [Fig. 9] La figure 9 illustre le carter d'unité d'aspiration de l'aspirateur portatif de la figure 1 selon une vue en perspective de trois quarts avant ;
- [Fig. 10] La figure 10 illustre le carter d'unité d'aspiration de la figure 1 en coupe longitudinale.

### Description détaillée

Dans la suite de la description, l'aspirateur portatif est dénommé aspirateur.

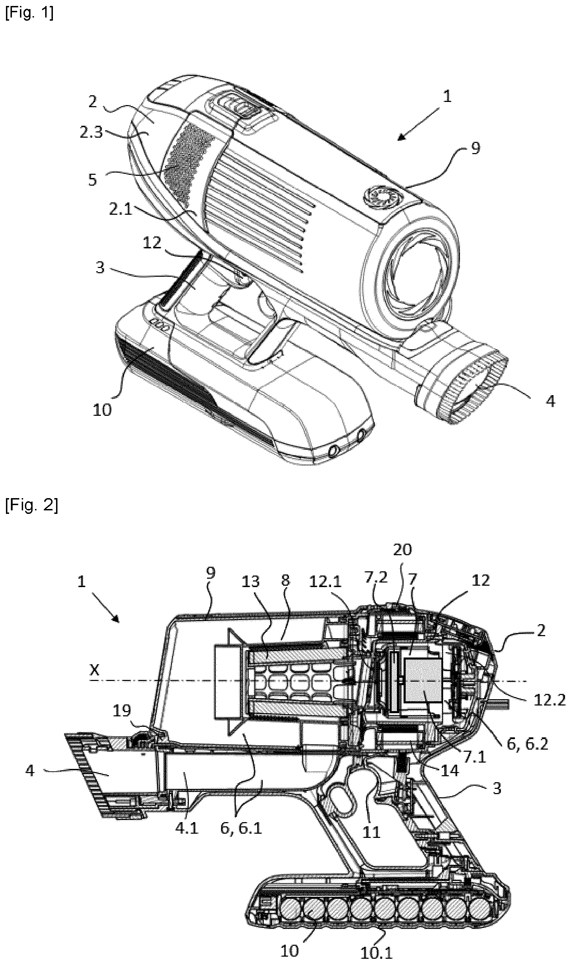

Les figures 1 à 10 représentent un aspirateur 1 comportant un boitier d'aspirateur 2, une poignée de préhension 3 reliée au boitier d'aspirateur 2, un embout d'aspiration d'air 4 par lequel l'air extérieur peut être aspiré par l'aspirateur 1, plusieurs orifices d'échappement d'air 5 par lesquels l'air nettoyé peut sortir de l'aspirateur 1. L'aspirateur 1 comprend en outre un circuit aéraulique 6 qui s'étend entre l'embout d'aspiration 4 et les orifices d'échappement 5. L'aspirateur 1 comprend une unité d'aspiration 7 disposée sur le circuit aéraulique 6. L'unité d'aspiration 7 comprend un moteur électrique 7.1 et un ventilateur 7.2 (représentés aux figures 2, 4 et 6) couplé au moteur électrique 7.1 pour générer un flux d'air dans le circuit aéraulique 6 depuis l'embout d'aspiration 4 jusqu'aux l'orifices d'échappement 5. La poignée de préhension 3 peut être obtenue de fabrication en une seule pièce avec le boîtier d'aspirateur 2 ou être rapportée à celui-ci.

L'aspirateur 1 comprend également un dispositif de séparation des déchets 8 disposé sur le circuit aéraulique 6 en amont 6.1 de l'unité d'aspiration 7. Le dispositif de séparation des déchets 8 est traversé par un flux d'air généré par l'unité d'aspiration 7 lorsque l'aspirateur 1 est en fonctionnement. L'aspirateur comprend 1 un bol amovible 9, également connu sous le nom récipient de stockage des déchets, destiné à recevoir et accumuler les déchets séparés par le dispositif de séparation des déchets 8 et qui est attaché de manière amovible au boitier d'aspirateur 2. Le dispositif de séparation des déchets 8 est avantageusement disposé dans le bol amovible 9. Le bol amovible 9 forme dans ce cas une chambre de séparation. Le dispositif de séparation des déchets 8 est détachable du bol amovible 9 pour pouvoir plus facilement vider le contenu du bol amovible 9 lorsque celui-ci est détaché du boitier d'aspirateur 2. L'embout d'aspiration d'air 4 est relié à la chambre de séparation, correspondant à l'intérieur du bol amovible 9, par une conduite d'admission d'air 4.1 (représentée en figure 2).

L'aspirateur 1 comprend un bloc batterie 10 disposé en partie inférieure de l'aspirateur 1. Une surface inférieure 10.1 du bloc de batterie 10 permet de reposer l'aspirateur 1 sur une surface horizontale lorsque l'aspirateur 1 n'est pas utilisé (voir figure 2). La poignée de préhension 3 s'étend entre le bloc batterie 10 et le boîtier d'aspirateur 2 au niveau d'une partie arrière 13 de l'aspirateur.

L'aspirateur 1 comprend un bouton 11 de mise en fonctionnement de l'aspirateur commandant notamment la mise en fonctionnement de l'unité d'aspiration 7 lorsqu'il est actionné par l'utilisateur.

Le moteur électrique 7.1 comprend un arbre de sortie 7.3 (représenté aux figures 2, 4, 6 et 8) ayant un axe de rotation X. L'arbre de sortie 7.3 est couplé au ventilateur 7.2.

De façon avantageuse, et tel que représenté aux figures 1 à 10, le dispositif de séparation 8, le ventilateur 7.2 et le moteur électrique 7.1 sont alignés. Plus précisément le dispositif de séparation des déchets 8, le ventilateur 7.2 et le moteur électrique 7.1 sont alignés et centrés sur l'axe de rotation X du moteur électrique 7.1. L'axe de rotation X est dans cette configuration un axe principal de l'aspirateur 1.

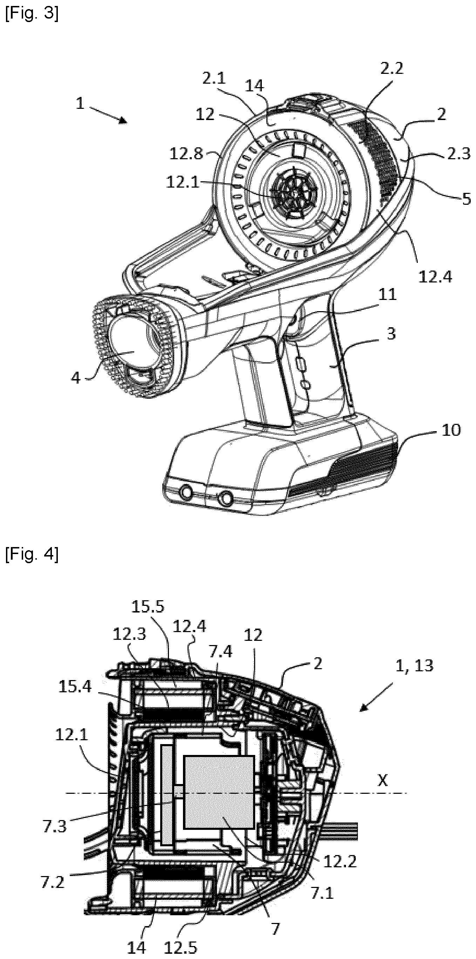

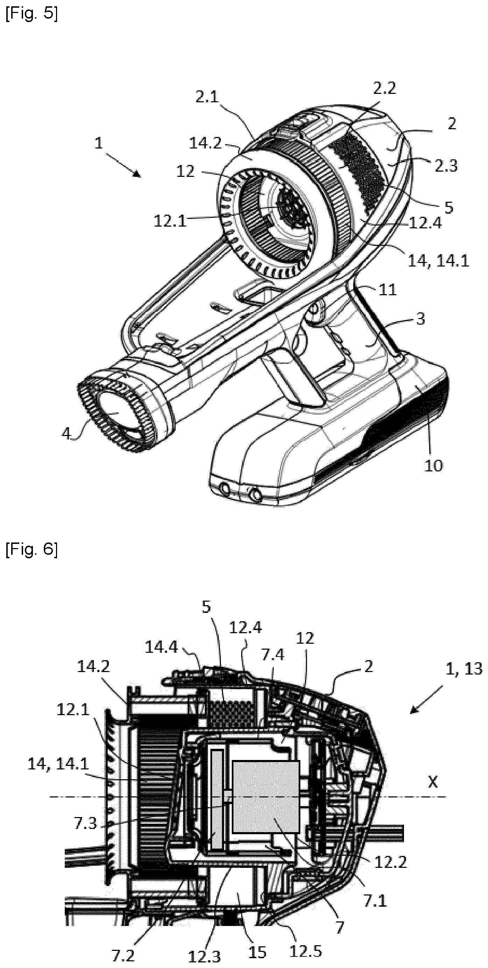

L'unité d'aspiration 7 appartient à une partie arrière 13 de l'aspirateur 1 et le dispositif de séparation des déchets 8 se situe devant l'unité d'aspiration 7. Les figures 4 et 6 représentent la partie arrière 13 de l'aspirateur 1. Dans le mode de réalisation représenté sur les figures, l'embout d'aspiration 4 de l'aspirateur 1 forme une extrémité avant de l'aspirateur portatif 1. Cet embout d'aspiration 4 est avantageusement en saillie vers l'avant par rapport au reste de l'aspirateur portatif 1, notamment par rapport au bol amovible 9.

L'aspirateur 1 comprend en outre un carter d'unité d'aspiration 12 qui entoure au moins partiellement l'unité d'aspiration 7. Plus précisément, le carter d'unité d'aspiration 12 comprend une première paroi 12.3 qui recouvre au moins partiellement l'unité d'aspiration 7.

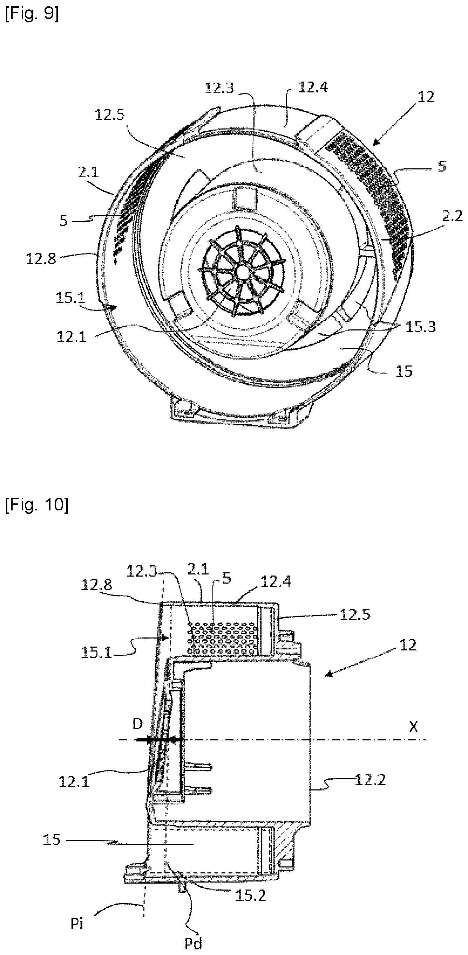

Le carter d'unité d'aspiration 12 est visible sur les figures 2 à 10 et plus spécifiquement aux figures 9 et 10. Le carter d'unité d'aspiration 12 sert notamment à positionner et maintenir l'unité d'aspiration 7 dans l'aspirateur 1 et également à protéger l'unité d'aspiration 1.

Comme représenté sur les figures, l'unité d'aspiration 7 peut comprendre un carter intermédiaire 7.4 qui, par rapport à l'axe de rotation X du moteur électrique 7.1, est arrangé radialement à l'intérieur du carter d'unité d'aspiration 12.

Le carter d'unité d'aspiration 12 comporte une ouverture d'entrée d'air 12.1 et une ouverture de sortie d'air 12.2 qui sont en communication aéraulique avec l'unité d'aspiration 7 et qui sont arrangées de part et d'autre de l'unité d'aspiration 7 selon la direction de l'axe de rotation X. L'ouverture d'entrée d'air 12.1 communique avec une partie amont 6.1 du circuit aéraulique 6 et la sortie d'air 12.2 communique avec une partie avale du circuit aéraulique 6. Autrement dit, la partie amont 6.1 du circuit aéraulique 6 se trouve en amont de l'unité d'aspiration 7 et s'étend entre l'embout d'aspiration 4 et l'unité d'aspiration 7. La partie avale 6.2 du circuit aéraulique 6 se trouve en aval de l'unité d'aspiration 7 et s'étend entre l'unité d'aspiration 7 et les orifices d'échappement 5.

Le dispositif de séparation des déchets 8 est arrangé dans la partie amont 6.1 du circuit aéraulique 6.

Dans le mode de réalisation des figures 1 à 10, le dispositif de séparation 8 est avantageusement un séparateur cyclonique ayant un axe principal qui est coaxial avec l'axe de rotation X de l'arbre de sortie 7.3 du moteur électrique 7.1. Dans une variante de réalisation non représentée et sans sortir du cadre de l'invention, le dispositif de séparation des déchets pourrait être réalisé par un filtre comprenant un média filtrant poreux pour laisser passer l'air et empêcher les déchets de le traverser.

Pour limiter l'aspiration de poussières dans l'unité d'aspiration 7, l'aspirateur 1 peut comprendre, en plus du dispositif de séparation des déchets 8, un filtre amont 13 (voir figure 2) qui dans le circuit aéraulique est disposé entre le dispositif de séparation des déchets 8 et l'unité d'aspiration 7. Ce filtre amont 13 est de préférence du type amovible, il est de forme tronconique et est logé dans une partie centrale du séparateur cyclonique.

Pour limiter ou éviter que des poussières ne sortent des orifices d'échappement 5 vers l'extérieure de l'aspirateur 1, l'aspirateur 1 comprend, en plus du dispositif de séparation des déchets 8, un filtre amovible 14 aval qui est placé dans une chambre de filtration 15. Le filtre amovible 14 et la chambre de filtration 15 sont disposés en aval de l'unité d'aspiration 7, plus précisément il sont disposés sur le circuit aéraulique entre l'unité d'aspiration 7 et les orifices d'échappement 5. La chambre de filtration 15 et le filtre amovible 14 sont disposés sur le circuit aéraulique 6 de telle sorte qu'ils sont traversés par un flux d'air généré par l'unité d'aspiration 7 lorsque l'aspirateur 1 est en fonctionnement.

Dans le mode de réalisation représenté aux figures, la chambre de filtration 15 et le filtre amovible 14 ont une forme annulaire qui s'étend autour de l'unité d'aspiration 7. La chambre de filtration 15 et le filtre amovible 14 sont, de préférence, centrés sur l'axe de rotation X. La chambre de filtration 15 est avantageusement entièrement contenue dans le boitier d'aspirateur 2.

Comme représenté sur les figures 4, 6 , 8, 9 et 10, le carter d'unité d'aspiration 12 comprend une deuxième paroi 12.4 qui entoure la première paroi 12.3. La deuxième paroi 12.4 est formée à distance de la première paroi 12.3 pour délimiter, en partie et avec la première paroi 12.3, la chambre de filtration 15. La chambre de filtration 15 s'étend entre la première paroi 12.3 et la deuxième paroi 12.4.

La première paroi 12.3 et la deuxième paroi 12.4 sont avantageusement de formes annulaires coaxiales à l'axe de rotation X de l'arbre de sortie 7.3 du moteur électrique 7.1. Dans l'exemple de réalisation des figures, la première paroi 12.3 et la deuxième paroi 12.4 sont plus spécifiquement de formes tubulaires. Dans une variante de réalisation non représentée la première paroi et deuxième paroi pourraient tout aussi bien être de formes sensiblement tronconiques.

Dans une autre variante de réalisation non représentée, la première paroi et la deuxième paroi sont de formes partiellement annulaires autour de l'axe de rotation du moteur électrique de telle sorte que la première paroi et la deuxième paroi délimitent une chambre de filtration de forme partiellement annulaire autour de l'unité d'aspiration. Selon cette variante, la chambre de filtration pourrait avoir, par exemple, la forme d'un tronçon d'anneau ou la chambre de filtration pourrait avoir une section dont la forme serait en « C » (anneau non fermé).

Selon le mode de réalisation représenté sur les figures, la première paroi 12.3 et la deuxième paroi 12.4 sont reliés par une paroi de liaison 12.5. Avantageusement, la paroi de liaison 12.5 s'étend radialement, par rapport à l'axe de rotation X du moteur électrique 7.1, entre la première paroi 12.3 et la deuxième paroi 12.4.

La première paroi 12.3, la deuxième paroi 12.4 et la paroi de liaison 12.5 délimitent la chambre de filtration 15 qui, de forme annulaire, s'étend autour de l'unité d'aspiration 7. Le filtre amovible 14 est aussi de forme annulaire s'ajustant dans la forme annulaire de la chambre d'aspiration 15. Le filtre amovible 14 comprend de préférence un média filtrant plissé 14.1 qui est configuré selon une forme annulaire (voir figures 5, 6, 7 et 8).

Comme représentés aux figures 9 et 10, la première paroi 12.3, la deuxième paroi 12.4 et la paroi de liaison 12.5 sont avantageusement réalisés en une seule pièce, de préférence en une seule pièce obtenue par injection plastique.

Comme représenté aux figures 9 et 10 la paroi de liaison 12.5 a une forme de disque annulaire. Dans une variante telle que précédemment décrite où la première paroi et la deuxième paroi sont de formes partiellement annulaires autour de l'axe de rotation du moteur électrique, la paroi de liaison est aussi de forme partiellement annulaire. Dans cette variante de réalisation, la paroi de liaison a, par exemple, la forme d'un tronçon de disque ou une forme sensiblement rectangulaire ou trapézoïdale ou une forme en « C ».

Dans une autre variante de réalisation (non représentée) la première paroi et la deuxième paroi pourraient être reliés par des bras de liaisons s'étendant radialement entre la première paroi et la deuxième paroi. Selon cette variante, la première paroi, la deuxième paroi et les bras de liaisons sont avantageusement réalisés en une seule pièce, de préférence en une seule pièce obtenue par injection plastique

Selon le mode de réalisation représenté sur les figures, la chambre de filtration 15 comprend une ouverture d'accès 15.1 au filtre amovible 14 pour permettre à l'utilisateur d'accéder au filtre amovible 14 et retirer le filtre amovible 14 en dehors de l'aspirateur 1 lorsque le bol amovible 9 est détaché du boîtier d'aspirateur 2. L'ouverture d'accès 15.1 est formée dans le boitier d'aspirateur 2 et fait face au bol amovible 9 lorsque le bol amovible 9 est attaché au boîtier d'aspirateur 2. Le filtre amovible 14 est donc rendu inaccessible à l'utilisateur lorsque le bol amovible 9 est attaché au boîtier d'aspirateur 2. Plus précisément, l'ouverture d'accès 15.1 est formée dans le carter d'unité d'aspiration 12. L'ouverture d'accès 15.1 est formée sur un côté du carter d'unité d'aspiration 12 qui est opposé à la paroi de liaison 12.5. Ainsi la chambre de filtration 15 est définie par des parois 12.3, 12.4 et 12.5 du carter d'unité d'aspiration 12 qui sur une demi-section, par exemple une demi-section de la figure 10, forment sensiblement un «U». Cette forme en U est représentée en pointillés sur la figure 10 et porte la référence 15.2.

L'ouverture d'accès 15.1 fait face au bol amovible 9 lorsque le bol amovible est attaché au boitier d'aspirateur 2 de telle sorte que le filtre amovible 14 est retirable, par l'ouverture d'accès, vers l'avant de l'aspirateur 1 lorsque que le bol amovible 9 est détaché du boîtier d'aspirateur 2.

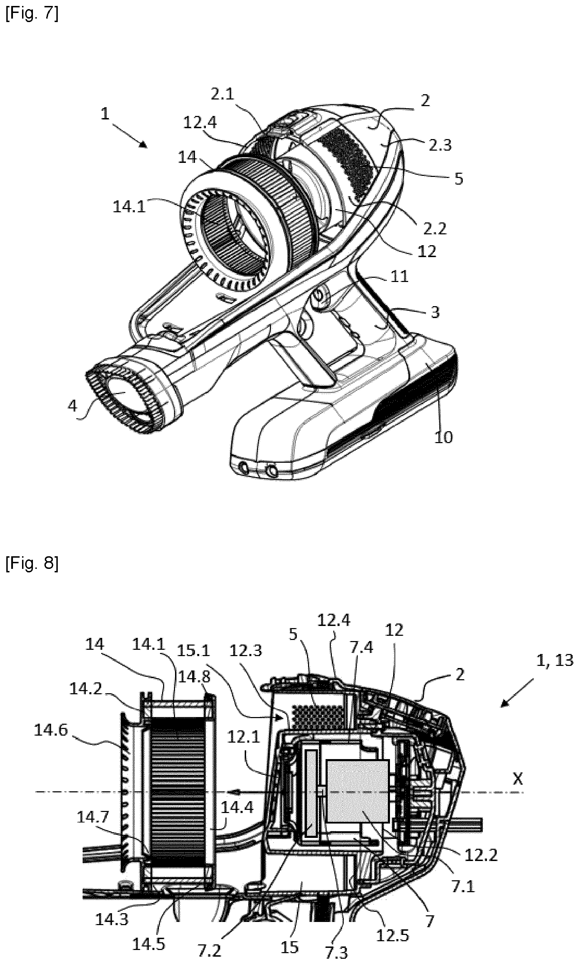

Le filtre amovible 14 comprend un premier disque d'extrémité annulaire 14.2 fixé à une première extrémité axiale 14.3 du média filtrant plissé 14.1 et un deuxième disque d'extrémité annulaire 14.4 fixé à un deuxième extrémité axiale 14.5 du média filtrant plissé 14.1 (voir figures 6 et 8).

Les disques d'extrémités annulaires 14.2 et 14.4 sont étanches et sont fixés de manière étanche aux extrémités axiales 14.3 et 14.5 du média filtrant plissé 14.1.

Le premier disque d'extrémité annulaire 14.2 ferme l'ouverture d'accès 15.1 lorsque le filtre amovible 14 est placé dans la chambre de filtration 15.

Le premier disque d'extrémité annulaire 14 comprend des moyens de préhension 14.6 tels que des languettes de préhension ou une collerette annulaire de préhension faisant saille axialement depuis le premier disque d'extrémité annulaire 14.2.

Le filtre amovible 14 délimite dans la chambre de filtration 15 une zone amont 15.4 et une zone avale 15.5 de la chambre de filtration 15 (voir figure 3).

L'aspirateur 1 comprend un premier joint d'étanchéité 14.7 disposé radialement entre la première paroi 12.3 et le premier disque d'extrémité annulaire 14.2.

L'aspirateur portatif comprend un deuxième joint d'étanchéité 14.8 disposé radialement entre le deuxième disque d'extrémité annulaire 14.4 et la deuxième paroi annulaire 12.4. Le premier joint d'étanchéité 14.7 et le deuxième joint d'étanchéité 14.8 sont de préférence attachés au filtre amovible 14 et par exemple logé dans des gorges annulaires du filtre amovible 14.

Le premier et deuxième joint d'étanchéités 14.7, 14.8 permettent, à l'exception des porosités du média filtrant plissé 14.1, d'isoler la zone amont 15.4 de la zone avale 15.4 de la chambre de filtration 15.

L'aspirateur 1 peut comprendre un troisième joint d'étanchéité disposé radialement entre le premier disque d'extrémité annulaire et la deuxième paroi annulaire. Le troisième joint d'étanchéité est de préférence attaché au filtre amovible.

L'aspirateur portatif peut comprendre un quatrième joint d'étanchéité disposé radialement entre le deuxième disque d'extrémité annulaire et la première paroi annulaire. Le quatrième joint d'étanchéité est de préférence attaché au filtre amovible.

La chambre de filtration 15 comprend au moins une entrée d'air 15.3 formée sur la paroi de liaison 12.5. Comme représenté en figure 9, plusieurs entrées d'air 15.3 sont avantageusement formées dans la paroi de liaison 12.5. Les entrées d'air 15.3 sont en communication aéraulique avec l'ouverture de sortie d'air 12.2 et avec l'unité d'aspiration 7. La chambre de filtration 15 comprend au moins une sortie d'air qui est formée sur la deuxième paroi 12.4. Avantageusement, la chambre de filtration 15 comprend plusieurs sorties d'air formées sur la deuxième paroi 12.4.

Avantageusement et tel que représentés sur les figures, deux portions de la deuxième paroi 12.4 forment deux parois 2.1 et 2.2 du boîtier d'aspirateur 2. Les orifices d'échappement 5 sont réalisés dans les deux portions de la deuxième paroi 12.4 formant les deux parois 2.1 et 2.2 du boîtier d'aspirateur 2. Avantageusement, les sorties d'air de la chambre de filtration 15 sont les orifices d'échappement 5. Les parois 2.1 et 2.2 sont avantageusement disposées de manière symétrique d'un côté et de l'autre de l'aspirateur 1.

La première paroi 12.3 est de préférence dépourvue d'ouverture sur sa périphérie et forme une surface sensiblement cylindrique ou tronconique pleine.

La deuxième paroi 12.4 est, selon une direction parallèle à l'axe de rotation X du moteur électrique 7.1, disposée entre le bol amovible 9 et une partie arrière 2.3 du boîtier d'aspirateur 2.

Avantageusement, lorsque le bol amovible 9 est attaché au boitier d'aspirateur, il est en appui sur le boitier de filtre via une interface de connexion 12.8 du boitier d'aspirateur. L'interface de connexion 12.8 définit un plan d'interface Pi.

L'ouverture d'accès 15.1 est formée à l'interface de connexion 12.8 du boitier d'aspirateur 2 ou dans un plan décalé Pd qui est perpendiculaire à l'axe de rotation X et qui est décalé par rapport au plan d'interface Pi vers l'intérieur du boitier d'aspirateur 2.

Le plan décalé Pd est décalé par rapport au plan d'interface d'une distance D, qui mesurée selon la direction de l'axe de rotation X, est inférieure à 1 cm.

L'interface de connexion comprend une surface de contact 12.8 qui est sensiblement annulaire. L'ouverture d'accès 15.1 et la chambre de filtration 15 sont arrangées dans le boitier d'aspirateur 2 radialement à l'intérieur de la surface de contact 12.8.

Le bol amovible 9 est attaché de manière réversible au boîtier d'aspirateur 2. Le bol amovible 9 peut être attaché de différentes manières au boîtier d'aspirateur 2, notamment par clipsage, par un moyen de fixation de type baïonnette, par vissage ou comme représenté par exemple sur la figure 1 à l'aide d'au moins une encoche 19 et d'un loquet de verrouillage 20.

Le mode opératoire permettant le retrait du filtre amovible 14 en dehors du boitier de d'aspirateur 2 est ci-après expliqué.

Les figures 1 et 2 montrent l'aspirateur 1 en un état de fonctionnement. Dans cet état de fonctionnement le filtre amovible 14 est en place dans la chambre de filtration 15 et le bol amovible 9 est attaché au boitier d'aspirateur 2.

Pour extraire le filtre amovible 14 et partant de l'état de fonctionnement précité, l'utilisateur détache d'abord le bol amovible 9 du boitier d'aspirateur 2 en déverrouillant le loquet de verrouillage 20 et en désengageant le bol amovible 9 de l'encoche 19. Une fois le bol amovible 9 détaché et éloigné du boitier d'aspirateur 2, le filtre amovible 14 devient accessible via l'ouverture d'accès 15.1. En effet, comme représenté aux figures 3 et 4, le premier disque annulaire 14.2 avantageusement muni de moyens de préhensions 14.6 est alors visible et accessible par l'utilisateur qui peut alors saisir le filtre amovible 14 par les moyens de préhensions 14.6. Cette 1ère étape intermédiaire de retrait du filtre amovible 14 est représentée aux figures 3 et 4.

Partant de la 1ère étape intermédiaire de retrait du filtre amovible 14 représentée aux figures 3 et 4, l'utilisateur saisit le filtre amovible 14 par les moyens de préhension 14.6, dans le cas présent une collerette annulaire, pour retirer le filtre amovible 14 via l'ouverture d'accès 15.1. L'utilisateur tire le filtre amovible 14 qui coulisse vers l'avant de l'aspirateur 1 selon une direction parallèle à l'axe de rotation X du moteur électrique 7.1. Plus précisément, l'utilisateur tient l'aspirateur 1 d'une première main par la poignée de préhension 3 et tire le filtre amovible 14 d'une deuxième main par les moyens de préhensions 14.6 de telle sorte que les deux mains de l'utilisateur sont sensiblement en vis-à-vis et exercent des forces de traction opposées. Les figures 5 et 6 montrent une 2ème étape intermédiaire où le filtre amovible 14 est partiellement retiré de la chambre de filtration 15.

Partant de la 2ème étape intermédiaire de retrait du filtre amovible 14 représentée aux figures 4 et 5, l'utilisateur continue le mouvement de retrait du filtre amovible 14 jusqu'à son retrait complet. Cette dernière étape de retrait complet du filtre amovible 14 est représentée aux figures 7 et 8 .

La présente invention permet donc d'accéder facilement au filtre amovible 14 dès que le bol amovible 9 est détaché du boitier de d'aspirateur 2. Selon la présente invention il n'est donc pas nécessaire de retirer ou déplacer un couvercle additionnel spécifique ou tout autre pièce intermédiaire pour accéder au filtre amovible 14 dès lors que le bol amovible 9 est détaché. Comme expliqué ci-dessus, dès que le bol amovible 9 est détaché et éloigné du boitier d'aspirateur 2, le filtre amovible 14 est visible et accessible et peut facilement être retiré en dehors du boitier d'aspirateur 2 en le faisant coulisser vers l'avant de l'aspirateur 1. Par ailleurs et comme expliqué ci-dessus, pour retirer le filtre amovible l'utilisateur a ses mains en vis-à-vis pour exercer des forces de tractions opposées. Cette position des mains pour le retrait du filtre amovible est naturelle et ergonomique pour l'utilisateur.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Par exemple, dans le mode de réalisation des figures 1 à 10, l'ouverture d'accès 15.1 faisant face au bol amovible 9 donne accès à un filtre amovible 14 disposé en aval de l'unité d'aspiration 7. Dans une variante de réalisation et sans sortir du domaine de protection de l'invention, l'ouverture d'accès 15.1 pourrait donner accès à un filtre amovible et à une chambre de filtration disposés en amont de l'unité d'aspiration 7.

Dans le mode de réalisation des figures 1 à 10, la chambre de filtration 15 est entièrement contenue dans le boitier d'aspirateur 2. Dans une variante de réalisation et sans sortir du domaine de protection de l'invention, chambre de filtration pourrait être formée en partie dans le boitier d'aspirateur et en partie dans le bol amovible de telle sorte que lorsque le bol amovible est retiré le filtre amovible fasse saille axialement au-delà du boitier d'aspirateur.

Dans le mode de réalisation des figures 1 à 10, la chambre de filtration 15 est formée dans un carter d'unité d'aspiration 7. Dans une variante de réalisation et sans sortir du domaine de protection de l'invention, la chambre de filtration pourrait être formée dans une pièce de l'aspirateur autre que le carter d'unité d'aspiration ou entre différentes pièces de l'aspirateur.

## Revendications

1. Aspirateur portatif (1) comprenant,
un boitier d'aspirateur (2),
une poignée de préhension (3) reliée au boitier d'aspirateur (2),
un embout d'aspiration (4) par lequel l'air extérieur peut être aspiré par l'aspirateur portatif (1),
au moins un orifice d'échappement (5) par lequel l'air nettoyé peut sortir de l'aspirateur portatif (1),
un circuit aéraulique (6) qui s'étend entre l'embout d'aspiration (4) et l'orifice d'échappement (5),
une unité d'aspiration (7) disposée sur le circuit aéraulique (6), l'unité d'aspiration (7) comprenant un moteur électrique (7.1) et un ventilateur (7.2) couplé au moteur électrique (7.1) pour générer un flux d'air dans le circuit aéraulique (6) depuis l'embout d'aspiration (4) jusqu'à l'orifice d'échappement (5),
un dispositif de séparation des déchets (8) disposé sur le circuit aéraulique (6) en amont de l'unité d'aspiration (7) et qui est traversé par le flux d'air généré par le ventilateur (7.2) lorsque l'aspirateur portatif (1) est en fonctionnement,
un bloc batterie (10) disposé en partie inférieure de l'aspirateur portatif (1) et comprenant une surface inférieure (10.1) permettant de reposer l'aspirateur portatif (1) sur une surface horizontale lorsque l'aspirateur portatif (1) n'est pas utilisé,
un filtre amovible (14) disposé sur le circuit aéraulique (6), le filtre amovible (14) étant logé dans une chambre de filtration (15) de l'aspirateur portatif (1), la chambre de filtration (15) étant formée au moins en partie dans le boîtier d'aspirateur (2) et étant arrangée au moins en partie entre l'unité d'aspiration (7) et une paroi du boitier d'aspirateur (2),
**caractérisé en ce que** l'aspirateur portatif (1) comprend un bol amovible (9) destiné à recevoir les déchets séparés par le dispositif de séparation des déchets (8) et qui est rattaché de manière amovible au boitier d'aspirateur (2), la chambre de filtration (15) comprenant une ouverture d'accès (15.1) pour accéder au filtre amovible (14) qui est formée dans l'aspirateur portatif (1) de telle sorte qu'elle permet d'accéder au filtre amovible (14) lorsque le bol amovible (9) est détaché du boîtier d'aspirateur (2) **en ce que,** lorsque le bol amovible (9) est attaché au boitier d'aspirateur (2), le bol amovible (9) est disposé par rapport au boîtier d'aspirateur (2) de telle sorte qu'il empêche l'accès au filtre amovible (14) par l'ouverture d'accès (15.1),
et **en ce que** la poignée de préhension (3) est agencée sous le boîtier d'aspirateur (2) et s'étend entre le bloc batterie (10) et le boîtier d'aspirateur (2), au niveau d'une partie arrière (13) de l'aspirateur.

2. Aspirateur portatif (1) selon la revendication 1, dans lequel l'ouverture d'accès (15.1) est formée dans le boitier d'aspirateur (2) et fait face au bol amovible (9) lorsque le bol amovible (9) est attaché au boîtier d'aspirateur (2).

3. Aspirateur portatif (1) selon la revendication 1, dans lequel l'embout d'aspiration (4) forme une partie avant de l'aspirateur portatif (1), et dans lequel l'ouverture d'accès (15.1) et le bol amovible (9) sont agencés l'un par rapport à l'autre de telle sorte que le filtre amovible (14) est retirable vers l'avant de l'aspirateur portatif (1) par l'ouverture d'accès (15.1) lorsque que le bol amovible (9) est détaché du boîtier d'aspirateur (2).

4. Aspirateur portatif (1) selon l'une quelconque des revendications 1 à 3, dans lequel la chambre de filtration (15) est entièrement contenue dans le boîtier d'aspirateur (2) et est arrangée entre l'unité d'aspiration (7) et une paroi du boitier d'aspirateur (2).

5. Aspirateur portatif (1) selon l'une quelconque des revendications 1 à 4, dans lequel le filtre amovible (14) et la chambre de filtration (15) s'étendent au moins partiellement autour de l'unité d'aspiration (7).

6. Aspirateur portatif (1) selon la revendication 5, dans lequel le filtre amovible (14) et la chambre de filtration (15) sont de formes globalement annulaires et s'étendent autour de l'unité d'aspiration (7), de préférence autour du moteur électrique (7.1) de l'unité d'aspiration (7).

7. Aspirateur portatif (1) selon l'une quelconque des revendications 1 à 6, dans lequel le moteur électrique (7.1) comprend un arbre de sortie (7.3) ayant un axe de rotation (X), dans lequel l'arbre de sortie (7.3) est couplé au ventilateur (7.2) et dans lequel le filtre amovible (14), la chambre de filtration (15) et l'ouverture d'accès (15.1) sont de formes annulaires et sont centrés sur l'axe de rotation (X).

8. Aspirateur portatif (1) selon l'une quelconque des revendications 1 à 7, dans lequel le dispositif de séparation des déchets (8), le ventilateur (7.2) et le moteur électrique (7.1) sont globalement alignés.

9. Aspirateur portatif (1) selon la revendication 7, dans lequel le dispositif de séparation des déchets (8) est un séparateur cyclonique ayant un axe principal qui est coaxial avec l'axe de rotation (X) de l'arbre de sortie (7.3) du moteur électrique (7.1).

10. Aspirateur portatif (1) selon l'une quelconque des revendications 1 à 9, dans lequel le filtre amovible (14) est disposé dans le circuit aéraulique (6) entre l'unité d'aspiration (7) et l'orifice d'échappement (5).

11. Aspirateur portatif (1) selon l'une quelconque des revendications 1 à 10, dans lequel l'aspirateur portatif (1) comprend un carter d'unité d'aspiration (12) qui entoure au moins partiellement l'unité d'aspiration (7).

12. Aspirateur portatif (1) selon la revendication 11, dans lequel le carter d'unité d'aspiration (12) comprend une première paroi (12.3) et une deuxième paroi (12.4) de formes annulaires, par exemple tubulaires ou tronconiques, la première paroi annulaire (12.3) entourant au moins partiellement l'unité d'aspiration (7) et la deuxième paroi annulaire (12.4) entourant au moins partiellement la première paroi annulaire (12.3), la deuxième paroi annulaire (12.4) étant concentrique à la première paroi annulaire (12.3) et étant formée à distance de la première paroi annulaire (12.3) pour délimiter un espace annulaire entre la première paroi annulaire (12.3) et la deuxième paroi annulaire (12.4), l'espace annulaire formant la chambre de filtration (15) dans laquelle est logé le filtre amovible (14).

13. Aspirateur portatif (1) selon la revendication 12, dans lequel la deuxième paroi annulaire (12.4) du carter d'unité d'aspiration (12) forme au moins une paroi du boitier d'aspirateur (2.1, 2.2).

14. Aspirateur portatif (1) selon la revendication 13, dans lequel la deuxième paroi annulaire (12.4) comprend ledit au moins un orifice d'échappement (5), de préférence plusieurs orifices d'échappement.

15. Aspirateur portatif (1) selon l'une quelconque des revendications 12 à 14, dans lequel la première paroi annulaire (12.3) et la deuxième paroi annulaire (12.4) sont reliées par au moins une paroi de liaison (12.5) qui s'étend radialement, par rapport à l'axe de rotation (X) du moteur électrique (7.1), entre la première paroi annulaire (12.3) et la deuxième paroi annulaire (12.4).

16. Aspirateur portatif (1) selon la revendication 15, dans lequel la paroi de liaison (12.5) s'étend au fond de la chambre de filtration (15), de préférence sur un côté du carter d'unité d'aspiration (12) qui est opposé à l'ouverture d'accès (15.1).

17. Aspirateur portatif (1) selon l'une quelconque des revendications 1 à 16, dans lequel le filtre amovible (14) est de forme annulaire et comprend de préférence un média filtrant plissé (14.1) qui est configuré selon une forme annulaire.

18. Aspirateur portatif (1) selon la revendication 17, dans lequel le filtre amovible (14) comprend des disques d'extrémités annulaires (14.2, 14.4) fixés aux extrémités axiales (14.3, 14.5) du média filtrant plissé (14.1).

19. Aspirateur portatif (1) selon la revendication 18, dans lequel un premier disque d'extrémité annulaire (14.2) ferme l'ouverture d'accès (15.1) lorsque le filtre amovible (14) est placé dans la chambre de filtration (15).

## Patentansprüche

1. Tragbarer Staubsauger (1), umfassend
ein Staubsaugergehäuse (2),
einen Haltegriff (3), der mit dem Staubsaugergehäuse (2) verbunden ist,
einen Saugeingang (4), durch den die Außenluft von dem tragbaren Staubsauger (1) angesaugt werden kann,
mindestens eine Abzugsöffnung (5), durch die die gereinigte Luft aus dem tragbaren Staubsauger (1) austreten kann,
einen lufttechnischen Kreis (6), der sich zwischen dem Saugeingang (4) und der Abzugsöffnung (5) erstreckt,
eine Saugeinheit (7), die auf dem lufttechnischen Kreis (6) angeordnet ist, wobei die Saugeinheit (7) einen Elektromotor (7.1) und einen Lüfter (7.2), der mit dem Elektromotor (7.1) gekoppelt ist, umfasst, um ausgehend von dem Saugeingang (4) bis zur Abzugsöffnung (5) einen Luftstrom im lufttechnischen Kreis (6) zu erzeugen,
eine Abfalltrennungsvorrichtung (8), die auf dem lufttechnischen Kreis (6) stromaufwärts der Saugeinheit (7) angeordnet ist und die von dem von dem Lüfter (7.2) erzeugten Luftstrom durchströmt wird, wenn der tragbare Staubsauger (1) in Betrieb ist,
ein Akkupack (10), das im unteren Teil des tragbaren Staubsaugers (1) angeordnet ist und eine untere Fläche (10.1) umfasst, die es ermöglicht, den tragbaren Staubsauger (1) auf einer horizontalen Fläche abzustellen, wenn der tragbare Staubsauger (1) nicht verwendet wird,
einen abnehmbaren Filter (14), der auf dem lufttechnischen Kreis (6) angeordnet ist, wobei der abnehmbare Filter (14) in einer Filterkammer (15) des tragbaren Staubsaugers (1) aufgenommen ist, wobei die Filterkammer (15) mindestens teilweise im Staubsaugergehäuse (2) gebildet ist und mindestens teilweise zwischen der Saugeinheit (7) und einer Wand des Staubsaugers (2) eingerichtet ist,
**dadurch gekennzeichnet, dass** der tragbare Staubsauger (1) eine abnehmbare Schale (9) umfasst, die dazu vorgesehen ist, die von der Abfalltrennungsvorrichtung (8) getrennten Abfälle aufzunehmen und die auf abnehmbare Weise am Staubsaugergehäuse (2) befestigt ist,
wobei die Filterkammer (15) eine Zugangsöffnung (15.1) für den Zugang zum abnehmbaren Filter (14) umfasst, die derart im tragbaren Staubsauger (1) gebildet ist, dass sie den Zugang zum abnehmbaren Filter (14) ermöglicht, wenn die abnehmbar Schale (9) vom Staubsaugergehäuse (2) gelöst ist, und dadurch, dass die abnehmbare Schale (9) am Staubsaugergehäuse (2) befestigt ist, wobei die abnehmbare Schale (9) in Bezug auf das Staubsaugergehäuse (2) derart angeordnet ist, dass sie den Zugang zum abnehmbaren Filter (14) über die Zugangsöffnung (15.1) verhindert,
und dadurch, dass der Haltegriff (3) unter dem Staubsaugergehäuse (2) angeordnet ist und sich zwischen dem Akkupack (10) und dem Staubsaugergehäuse (2) erstreckt, im Bereich eines hinteren Teils (13) des Staubsaugers.

2. Tragbarer Staubsauger (1) nach Anspruch 1, wobei die Zugangsöffnung (15.1) im Staubsaugergehäuse (2) gebildet ist und der abnehmbaren Schale (9) zugewandt ist, wenn die abnehmbare Schale (9) am Staubsaugergehäuse (2) befestigt ist.

3. Tragbarer Staubsauger (1) nach Anspruch 1, wobei der Saugeingang (4) einen vorderen Teil des tragbaren Staubsaugers (1) bildet und wobei die Zugangsöffnung (15.1) und die abnehmbare Schale (9) derart in Bezug zueinander eingerichtet sind, dass der abnehmbare Filter (14) zur Vorderseite des tragbaren Staubsaugers (1) über die Zugangsöffnung (15.1) entnommen werden kann, wenn die abnehmbare Schale (9) vom Staubsaugergehäuse (2) gelöst ist.

4. Tragbarer Staubsauger (1) nach einem der Ansprüche 1 bis 3, wobei die Filterkammer (15) vollständig im Staubsaugergehäuse (2) enthalten ist und zwischen der Saugeinheit (7) und einer Wand des Staubsaugers (2) eingerichtet ist.

5. Tragbarer Staubsauger (1) nach einem der Ansprüche 1 bis 4, wobei der abnehmbare Filter (14) und die Filterkammer (15) sich mindestens teilweise um die Saugeinheit (7) herum erstrecken.

6. Tragbarer Staubsauger (1) nach Anspruch 5, wobei der abnehmbare Filter (14) und die Filterkammer (15) allgemein ringförmige Formen aufweisen und sich um die Saugeinheit (7) herum, vorzugsweise um den Elektromotor (7.1) der Saugeinheit (7) herum, erstrecken.

7. Tragbarer Staubsauger (1) nach einem der Ansprüche 1 bis 6, wobei der Elektromotor (7.1) eine Ausgangswelle (7.3) umfasst, die eine Drehachse (X) aufweist, wobei die Ausgangswelle (7.3) mit dem Lüfter (7.2) gekoppelt ist und wobei der abnehmbare Filter (14), die Filterkammer (15) und die Zugangsöffnung (15.1) eine ringförmige Form aufweisen und auf der Drehachse (X) zentriert sind.

8. Tragbarer Staubsauger (1) nach einem der Ansprüche 1 bis 7, wobei die Abfalltrennungsvorrichtung (8), der Lüfter (7.2) und der Elektromotor (7.1) allgemein ausgerichtet sind.

9. Tragbarer Staubsauger (1) nach Anspruch 7, wobei die Abfalltrennungsvorrichtung (8) ein Zyklonabscheider ist, der eine Hauptachse aufweist, die koaxial zur Drehachse (X) der Ausgangswelle (7.3) des Elektromotors (7.1) ist.

10. Tragbarer Staubsauger (1) nach einem der Ansprüche 1 bis 9, wobei der abnehmbare Filter (14) im lufttechnischen Kreis (6), zwischen der Saugeinheit (7) und der Abzugsöffnung (5) angeordnet ist.

11. Tragbarer Staubsauger (1) nach einem der Ansprüche 1 bis 10, wobei der tragbare Staubsauger (1) einen Saugeinheitskasten (12) umfasst, der die Saugeinheit (7) mindestens teilweise umgibt.

12. Tragbarer Staubsauger (1) nach Anspruch 11, wobei der Saugeinheitskasten (12) eine erste Wand (12.3) und eine zweite Wand (12.4) mit ringförmiger, zum Beispiel rohrförmiger oder kegelförmiger, Form umfasst, wobei die erste ringförmige Wand (12.3) mindestens teilweise die Saugeinheit (7) umgibt und wobei die zweite ringförmige Wand (12.4) mindestens teilweise die erste ringförmige Wand (12.3) umgibt, wobei die zweite ringförmige Wand (12.4) konzentrisch zur ersten ringförmigen Wand (12.3) ist und beabstandet zur ersten ringförmigen Wand (12.3) gebildet ist, um einen ringförmigen Raum zwischen der ersten ringförmigen Wand (12.3) und der zweiten ringförmigen Wand (12.4) zu begrenzen, wobei der ringförmige Raum die Filterkammer (15) bildet, in der der abnehmbare Filter (14) aufgenommen ist.

13. Tragbarer Staubsauger (1) nach Anspruch 12, wobei die zweite ringförmige Wand (12.4) des Staubsaugergehäuses (12) mindestens eine Wand des Staubsaugergehäuses (2.1,2.2) bildet.

14. Tragbarer Staubsauger (1) nach Anspruch 13, wobei die zweite ringförmige Wand (12.4) die mindestens eine Abzugsöffnung (5), vorzugsweise mehrere Abzugsöffnungen, umfasst.

15. Tragbarer Staubsauger (1) nach einem der Ansprüche 12 bis 14, wobei die erste ringförmige Wand (12.3) und die zweite ringförmige Wand (12.4) durch mindestens eine Verbindungswand (12.5) verbunden sind, die sich in Bezug auf die Drehachse (X) des Elektromotors (7.1) zwischen der ersten ringförmigen Wand (12.3) und der zweiten ringförmigen Wand (12.4) radial erstreckt.

16. Tragbarer Staubsauger (1) nach Anspruch 15, wobei die Verbindungswand (12.5) sich zum Boden der Filterkammer (15), vorzugsweise auf einer Seite des Staubsaugergehäuses (12), die der Zugangsöffnung (15.1) gegenüberliegt, erstreckt.

17. Tragbarer Staubsauger (1) nach einem der Ansprüche 1 bis 16, wobei der abnehmbare Filter (14) eine ringförmige Form aufweist und vorzugsweise ein gefaltetes Filtermedium (14.1) umfasst, das gemäß einer ringförmigen Form konfiguriert ist.

18. Tragbarer Staubsauger (1) nach Anspruch 17, wobei der abnehmbare Filter (14) Scheiben mit ringförmigen Enden (14.2, 14.4) umfasst, die an den axialen Enden (14.3, 14.5) des gefalteten Filtermediums (14.1) befestigt sind.

19. Tragbarer Staubsauger (1) nach Anspruch 18, wobei eine erste Scheibe mit ringförmigem Ende (14.2) die Zugangsöffnung (15.1) verschließt, wenn der abnehmbare Filter (14) in der Filterkammer (15) platziert ist.

## Claims

1. Portable vacuum cleaner (1) comprising,
a vacuum cleaner housing (2),
a gripping handle (3) connected to the vacuum cleaner housing (2),
a suction nozzle (4) through which the outside air can be sucked by the portable vacuum cleaner (1),
at least one exhaust port (5) through which the cleaned air can exit from the portable vacuum cleaner (1),
an aeraulic circuit (6) that extends between the suction nozzle (4) and the exhaust port (5),
a suction unit (7) arranged on the aeraulic circuit (6), the suction unit (7) comprising an electric motor (7.1) and a fan (7.2) coupled to the electric motor (7.1) to generate a flow of air in the aeraulic circuit (6) from the suction nozzle (4) to the exhaust port (5),
a device for separating waste (8) arranged on the aeraulic circuit (6) upstream from the suction unit (7) and through which the flow of air generated by the fan (7.2) passes when the portable vacuum cleaner (1) is operating,
a battery pack (10) arranged in a lower part of the portable vacuum cleaner (1) and comprising a lower surface (10.1) allowing the portable vacuum cleaner (1) to rest on a horizontal surface when the portable vacuum cleaner (1) is not in use,
a removable filter (14) arranged on the aeraulic circuit (6), the removable filter (14) being housed in a filtration chamber (15) of the portable vacuum cleaner (1), the filtration chamber (15) being formed at least partially in the vacuum cleaner housing (2) and being arranged at least partially between the suction unit (7) and a wall of the vacuum cleaner housing (2),
**characterized in that** the portable vacuum cleaner (1) comprises a removable bowl (9) intended to receive the waste separated by the waste separation device (8) and that is removably attached to the vacuum cleaner housing (2),
the filtration chamber (15) comprising an access opening (15.1) to access the removable filter (14) that is formed in the portable vacuum cleaner (1) in such a way that it makes it possible to access the removable filter (14) when the removable bowl (9) is detached from the vacuum cleaner housing (2) and **in that**, when the removable bowl (9) is attached to the vacuum cleaner housing (2), the removable bowl (9) is arranged with respect to the vacuum cleaner housing (2) in such a way that it prevents access to the removable filter (14) via the access opening (15.1),
and **in that** the gripping handle (3) is arranged under the vacuum cleaner housing (2) and extends between the battery pack (10) and the vacuum cleaner housing (2), at a rear part (13) of the vacuum cleaner.

2. Portable vacuum cleaner (1) according to claim 1, wherein the access opening (15.1) is formed in the vacuum cleaner housing (2) and faces the removable bowl (9) when the removable bowl (9) is attached to the vacuum cleaner housing (2).

3. Portable vacuum cleaner (1) according to claim 1, wherein the suction nozzle (4) forms a front portion of the portable vacuum cleaner (1), and wherein the access opening (15.1) and the removable bowl (9) are arranged with respect to one another in such a way that the removable filter (14) can be withdrawn towards the front of the portable vacuum cleaner (1) via the access opening (15.1) when the removable bowl (9) is detached from the vacuum cleaner housing (2).

4. Portable vacuum cleaner (1) according to any of claims 1 to 3, wherein the filtration chamber (15) is entirely contained in the vacuum cleaner housing (2) and is arranged between the suction unit (7) and a wall of the vacuum cleaner housing (2).

5. Portable vacuum cleaner (1) according to any of claims 1 to 4, wherein the removable filter (14) and the filtration chamber (15) extend at least partially around the suction unit (7).

6. Portable vacuum cleaner (1) according to claim 5, wherein the removable filter (14) and the filtration chamber (15) have a globally annular shape and extend around the suction unit (7), preferably around the electric motor (7.1) of the suction unit (7).

7. Portable vacuum cleaner (1) according to any of claims 1 to 6, wherein the electric motor (7.1) comprises an output shaft (7.3) having an axis of rotation (X), wherein the output shaft (7.3) is coupled to the fan (7.2) and wherein the removable filter (14), the filtration chamber (15) and the access opening (15.1) are of annular shape and are centered on the axis of rotation (X).

8. Portable vacuum cleaner (1) according to any of claims 1 to 7, wherein the waste separation device (8), the fan (7.2) and the electric motor (7.1) are globally aligned.

9. Portable vacuum cleaner (1) according to claim 7, wherein the waste separation device (8) is a cyclonic separator having a main axis that is coaxial with the axis of rotation (X) of the output shaft (7.3) of the electric motor (7.1).

10. Portable vacuum cleaner (1) according to any of claims 1 to 9, wherein the removable filter (14) is arranged in the aeraulic circuit (6) between the suction unit (7) and the exhaust port (5).

11. Portable vacuum cleaner (1) according to any of claims 1 to 10, wherein the portable vacuum cleaner (1) comprises a suction unit casing (12) that surrounds the suction unit (7) at least partially.

12. Portable vacuum cleaner (1) according to claim 11, wherein the suction unit casing (12) comprises a first wall (12.3) and a second wall (12.4) of annular shapes, for example tubular or frustoconical, the first annular wall (12.3) surrounding at least partially the suction unit (7) and the second annular wall (12.4) surrounding at least partially the first annular wall (12.3), the second annular wall (12.4) being concentric with the first annular wall (12.3) and being formed at a distance from the first annular wall (12.3) in order to delimit an annular space between the first annular wall (12.3) and the second annular wall (12.4), the annular space forming the filtration chamber (15) wherein the removable filter (14) is housed.

13. Portable vacuum cleaner (1) according to claim 12, wherein the second annular wall (12.4) of the suction unit casing (12) forms at least one wall of the vacuum cleaner housing (2.1,2.2).

14. Portable vacuum cleaner (1) according to claim 13, wherein the second annular wall (12.4) comprises said at least one exhaust port (5), preferably several exhaust ports.

15. Portable vacuum cleaner (1) according to any of claims 12 to 14, wherein the first annular wall (12.3) and the second annular wall (12.4) are connected by at least one connection wall (12.5) that extends radially, with respect to the axis of rotation (X) of the electric motor (7.1), between the first annular wall (12.3) and the second annular wall(12.4).

16. Portable vacuum cleaner (1) according to claim 15, wherein the connection wall (12.5) extends at the bottom of the filtration chamber (15), preferably on a side of the suction unit casing (12) that is opposite the access opening (15.1).

17. Portable vacuum cleaner (1) according to any of claims 1 to 16, wherein the removable filter (14) has an annular shape and preferably comprises a pleated filter medium (14.1) that is configured according to an annular shape.

18. Portable vacuum cleaner (1) according to claim 17, wherein the removable filter (14) comprises annular end discs (14.2, 14.4) fixed at the axial ends (14.3, 14.5) of the pleated filter medium (14.1).

19. Portable vacuum cleaner (1) according to claim 18, wherein a first annular end disc (14.2) closes the access opening (15.1) when the removable filter (14) is placed in the filtration chamber (15).
